# EUROPEAN PATENT SPECIFICATION

(11) **EP 4 042 030 B1**
(45) Date of publication and mention of the grant of the patent: **02.08.2023**
(21) Application number: 20790087.9
(22) Date of filing: 08.10.2020
(51) Int. Cl.: F16D 1/08

(54) **HOOK PLATE KEY, HOOK PLATE ASSEMBLY COMPRISING A KEY, AND METHODS FOR MANUFACTURING AND MOUNTING A HOOK PLATE KEY**
HAKENPLATTENSCHLÜSSEL, HAKENPLATTENANORDNUNG, DIE EINEN SCHLÜSSEL UMFASST, UND VERFAHREN ZUM HERSTELLEN UND MONTIEREN EINES HAKENPLATTENSCHLÜSSELS
CLEF DE PLAQUE À CROCHET, ENSEMBLE À PLAQUE À CROCHET COMPRENANT UNE CLEF, ET PROCÉDÉS DE FABRICATION ET DE MONTAGE D'UNE CLEF DE PLAQUE À CROCHET

(30) Priority: 08.10.2019 SE 1951146
(43) Date of publication of application: 17.08.2022
(73) Proprietor: Dellner Couplers AB, 791 95 Falun (SE)
(72) Inventor: TÄRESTAM, Per Gunnar, 791 61 Falun (SE)
(74) Representative: Brann AB
(86) International application number: PCT/SE2020/050962
(87) International publication number: WO 2021/071416

(56) References cited:
- JP-A- S4 978 058
- JP-A- 2011 080 519
- JP-U- S58 153 703
- NL-A- 7 301 211

## Description

### TECHNICAL FIELD

The present invention relates to a hook plate key for enabling co-rotation of a cylindrical main pin and a hook plate assembly of a coupler for a rail vehicle. The invention also relates to a hook plate for a coupler with such a key, and to a method for manufacturing a hook plate key and a method for mounting a hook plate key in a hook plate.

### BACKGROUND

When coupling rail vehicles to each other, a mechanical coupling is generally established using a coupler of the Scharfenberg type. This coupler relies on a hook plate with a protruding connection element on one of the rail vehicles mating with a corresponding hook plate with connection element on the other rail vehicle. The hook plates are pivotally arranged and co-pivots with a main pin that is locked to the hook plate by a hook plate key to prevent them from rotating independently.

The hook plate key is manufactured separately and installed in a hook plate assembly, often before mounting on the rail vehicle. During periods of storage and transport there is a risk that the hook plate key is accidentally removed from the hook plate assembly, thereby rendering the mounting of the main pin impossible. To avoid this the hook plate key is sometimes welded into place in a slot in the hook plate assembly, but it is generally undesirable to use welding in the hook plate assembly due to the risk of altering material properties of the components. Other known fastening methods include using adhesive to keep the key in place. Using permanent fastening such as welding also unduly prevents the desired removal and replacement of the hook plate key. To instead supply additional fastening devices to keep the hook plate key in place is also undesirable from a cost efficiency perspective.

JPS4978058A discloses a disk having a shaft and a hole cooperating with the shaft, the shaft and the disk being subjected to torque and thrust loads as they rotate, and a matching key between the shaft and the disk. Also disclosed is a method comprising a key cooperating with the keyway to transmit torque between the shaft and the disk, a circumferentially extending groove in the disk, and a radially extending, circumferentially extending protrusion in the groove, the protrusion being operatively associated with the shaft such that the protrusion is axially fixed to the shaft. Furthermore, a disc retaining device adapted to prevent relative axial movement between the shaft and the disc is disclosed.

There is therefore a need for a hook plate key that can be fastened to a hook plate assembly without requiring permanent fastening such as welding and also without requiring additional fastening components or health and environmentally dangerous liquids used as adhesive that require special precautions.

### SUMMARY

The object of the present invention is to eliminate or at least to minimize the problems discussed above. This is achieved by a hook plate key and a hook plate assembly, and also by a method for manufacturing a hook plate key and a method for mounting a hook plate key in a hook plate, according to the appended independent claims.

Thus, the hook plate key according to the present invention comprises an elongated key body having a first surface that extends longitudinally from a first end to a second end, the key body further comprising at least one protrusion that protrudes from the first surface. Thereby, the protrusion acts as a holder that keeps the hook plate key in place in a slot of a hook plate assembly. This allows for the easy and reliable holding of the hook plate key in the slot in a reliable and convenient way and also allows for aligning with hook plate key with the slot as desired.

Suitably, the key body comprises at least two protrusions that are arranged at a distance from each other in a longitudinal direction. This further improves the holding of the hook plate key in the hook plate assembly.

The first surface may comprise a first longitudinal edge and the hook plate key may comprise at least one protrusion protruding from the first surface along the first longitudinal edge. This also improves the holding of the hook plate key in the hook plate assembly, since the distribution of protrusions can be adapted to provide a suitable holding structure for the hook plate key.

Suitably, the at least one first protrusion is/are offset from the at least one second protrusion in the longitudinal direction. This also improves the holding structure of the hook plate key so that a secure holding in the hook plate assembly is achieved. At least one first protrusion may suitably coincide with at least one second protrusion in the longitudinal direction. This is also advantageous in further improving the distribution of protrusions to achieve a more secure holding of the hook plate key in the hook plate assembly.

The key body has a first diameter and the at least one protrusion suitably protrudes from the first surface at least 1% of the first diameter. Thereby, the protrusion(s) may abut side walls of the slot while still keeping the key body separated from the walls. Suitably, the at least one protrusion protrudes from the first surface at least 1,5% of the first diameter, preferably at least 2%.

Suitably, the at least one protrusion is a ridge that extends along the first surface. Thereby, a well-defined holding structure may be achieved and enable fixing of the hook plate key in the hook plate assembly in a reliable way.

In the hook plate key according to the present invention, the key body further comprises a second surface that is opposite to the first surface and the key body comprises at least one protrusion that protrudes from the second surface. This further increases the holding and aligning of the hook plate key in the slot of the hook plate assembly.

Suitably, at least one protrusion that protrudes from the first surface is arranged diametrically opposite to a matching protrusion that protrudes from the second surface. This further improves the holding and aligning of the hook plate key in the hook plate assembly.

At least one protrusion that protrudes from the first surface may also suitably be offset in a longitudinal direction or a transversal direction from a protrusion that protrudes from the second surface. This also improves the holding and aligning of the hook plate key in the slot of the hook plate assembly.

The invention also pertains to a hook plate assembly that comprises a hook plate, an essentially cylindrical through hole in the hook plate for receiving a main pin, a key slot for holding a key to enable co-rotation of the main pin and the hook plate, the key slot being arranged longitudinally along an inner wall of the through hole, and that further comprises a hook plate key according to the invention that is mounted in the key slot.

The invention also relates to a method for manufacturing a hook plate key, the method comprising steps of
- providing a hook plate key that comprises an elongated key body having a first surface that extends longitudinally from a first end to a second end, the first surface having at least one longitudinal edge,
- providing a deformation tool for modifying a shape of the hook plate key,
- creating a protrusion in the first surface by inserting the deformation tool into a deformation zone of a third surface of the key body, the second surface being a surface that is essentially perpendicular to the first surface and that is connected to the first surface by the longitudinal edge.

Thereby, any suitable hook plate key can be modified in a simple and efficient way to arrive at the hook plate key of the present invention. By inserting the deformation tool with force into the key body, material of the key body is displaced to form the protrusion. One such insertion is by stamping but other ways of achieving the protrusions may also be used. Suitably, the deformation zone is a portion of a surface that has a distance to a surface in which a protrusion is to be created of of 20-80% of a transversal diameter of the key body, preferably 30-70%, more preferably 40-60.Thereby, the deformation of the key body can be controlled so that the protrusion is created in a desired place.

Furthermore, the method comprises the step of creating a protrusion in a second surface by inserting the deformation tool into a deformation zone of the third surface of the key body, the second surface being a surface that is opposite to the first surface Thereby, protrusions may be created along the first surface and the second surface and may be distributed as desired by selecting the deformation zones where the tool is inserted.

Furthermore, the method suitably comprises repeating the step of creating a protrusion in the first surface and optionally also in the second surface. Thereby, any number of protrusions may be created.

The present invention also relates to a method for mounting a hook plate key in a slot of a hook plate, the method comprising the steps of providing a hook plate key according to the invention, providing a hook plate assembly having a slot in a wall of a through hole for receiving a main pin, aligning the hook plate key with the slot, the hook plate key being arranged with the first surface facing in a direction that is perpendicular to a radial direction outwards from the through hole,, and inserting the hook plate key into the slot. Thereby, the hook plate key of the invention may be mounted as desired to achieve a secure holding of the hook plate key as well as a suitable aligning in the key slot.

Many additional benefits and advantages of the present invention will be readily understood by the skilled person in view of the detailed description below.

### DRAWINGS

The invention will now be described in more detail with reference to the appended drawings, wherein
Fig. 1 discloses cross-sectional view from above of a hook plate for a coupler according to the present invention with a hook plate key;
Fig. 2a discloses a perspective view of the hook plate with the hook plate key;
Fig. 2b discloses a perspective view of a main pin for insertion into a through hole of the hook plate of Fig. 1 or 2a;
Fig. 3 discloses a perspective view from the side of an embodiment of the hook plate key not covered by the present invention;
Fig. 4 discloses a planar view from the side of the hook plate key according to the invention; and
Fig. 5 discloses a planar view of another embodiment of the hook plate key from the left hand side.

### DETAILED DESCRIPTION

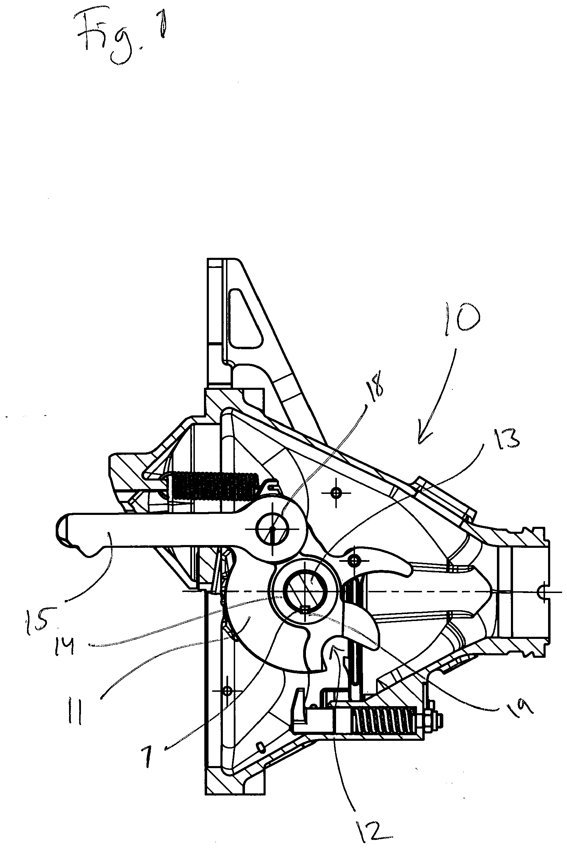

Fig. 1 discloses a hook plate assembly 10 for a coupler of a rail vehicle. The components and function of a coupler is well known to the skilled person and will be described herein only to the extent that it is relevant to the present invention.

The hook plate assembly 10 of Fig. 1 is of the Scharfenberg type and has a pivoting hook plate 11 on which a notch 12 is provided and to which a connecting element 15 is pivotally attached to a connection pivot 18. The hook plate 11 itself is configured to pivot with a main pin 13 that is mounted in a through hole 14 that is essentially cylindrical. A hook plate key 1 is mounted in a key slot 19 that extends longitudinally in a wall of the through hole 14 as will be described in more detail further below.

During operation and when coupling the rail vehicle to a similar rail vehicle, the hook plate 11 co-pivots with the main pin 13 in a clockwise direction against a bias (not shown) when the connection element 15 is pressed against a similar hook plate assembly of the similar rail vehicle. The clockwise pivoting proceeds until the connection element 15 of each hook plate assembly contacts the notch of the opposing hook plate assembly. Then, a connection is established by the connecting element and the opposing notch, and the hook plate 11 is pivoted by the bias back in a counter-clockwise direction.

The hook plate key 1 serves to establish a connection between the hook plate 11 and the main pin 13 so that they are able to co-pivot and so that rotary movement of one without the corresponding rotation of the other is avoided.

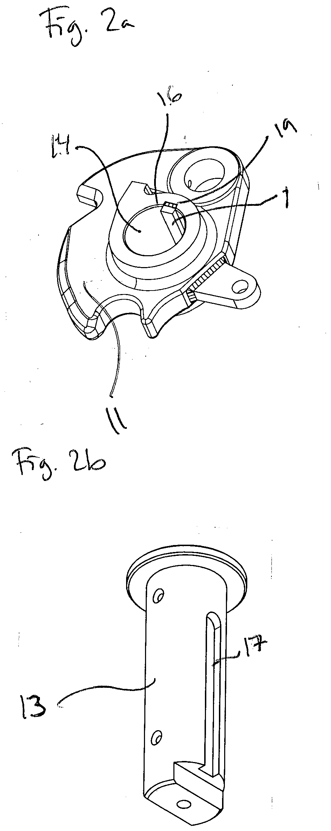

Fig. 2a discloses the hook plate 11 with the through hole 14 but without the main pin 13 so that the hook plate key 1 is shown. The hook plate key 1 is an elongated key and is mounted in a key slot 19 in an inner wall 16 of the through hole 14.

Fig. 2b shows the main pin 13 with a pin slot 17 that corresponds to dimensions of the hook plate key 1. When the main pin 13 is mounted in the through hole 14 of the hook plate assembly 10, the hook plate key 1 is fixedly mounted in the key slot 19 and also protrudes into the pin slot 17 in order to connect the main pin 13 to the hook plate 11. This enable them to rotate together.

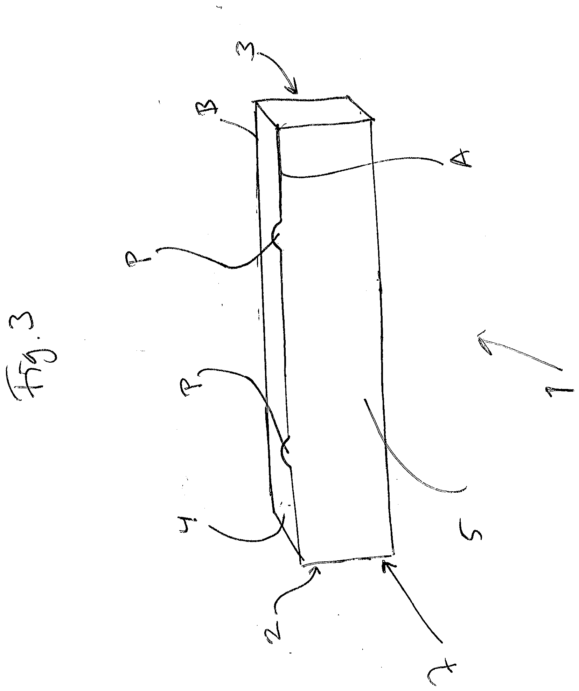

Fig. 3 discloses the hook plate key 1 according to an embodiment which is not covered by claim 1 and which is thus no part of the invention. In this embodiment, the hook plate key 1 has an essentially cuboid shape, but in other embodiments the hook plate key 1 could instead have rounded ends or be of another suitable shape as long as it is able to fit into the key slot 19 and still protrude into the pin slot 17 when the pin is mounted in the hook plate assembly 10.

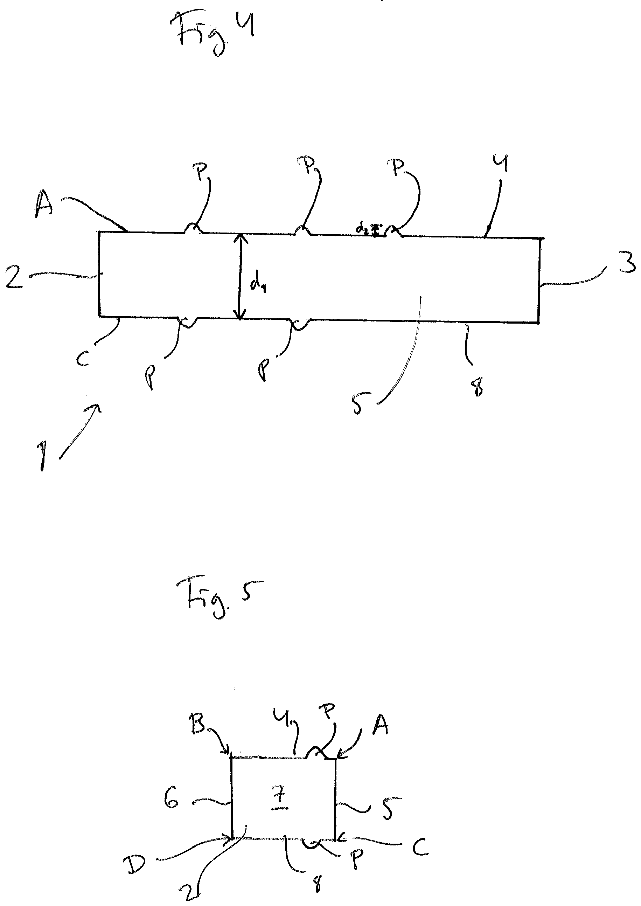

The hook plate key 1 has an elongated key body 7 that extends longitudinally from a first end 2 to a second end 3 and that has a first surface 4 and a third surface 5 that connect the first end 2 and the second end 3 and that are arranged essentially perpendicularly to each other. The first surface 4 and the third surface 5 are connected by a first longitudinal edge A that runs from the first end 2 to the second end 3. Similarly, the first surface 4 is connected to a fourth surface 6 (see Fig. 5) by a second longitudinal edge B. Opposite the first surface 4 is a second surface 8 that is connected to the third surface 5 and the fourth surface 6 by third and fourth longitudinal edges C and D, respectively. At least one protrusion P protrudes form the first surface 4.

The protrusion P serves to fixate the hook plate key 1 inside the key slot 19, so that the hook plate key 1 is held securely without the need for separate fastening elements or for joining the hook plate key to the hook plate 11 by methods such as welding.

Thus, the at least one protrusion P in the hook plate key 1 forms a holding structure for the hook plate key 1 to prevent movements of the hook plate key 1 in relation to the hook plate 11 in a mounted state in the key slot 19, or even loosening of the hook plate key 1 from the key slot 19 after mounting. It is advantageous that the protrusion P extends essentially perpendicularly to the first surface 4 to achieve well-defined holders. Fig. 3 discloses two protrusions P that protrude from the first surface 4 and the second surface 8 near the first and third longitudinal edges A, C, but in some embodiments only one protrusion P could be provided or alternatively a plurality of protrusions P could be provided. It is advantageous to provide the protrusions P with a longitudinal offset so that protrusions P are distributed along the first surface 4 and optionally also the second surface 8. It is also advantageous that protrusions P on the first surface 4 are offset from protrusions P on the second surface 8. However, in some embodiments the protrusions P could instead be provided with at least one protrusion P along the first longitudinal edge A matching a protrusion P along the third longitudinal edge C so that they are at an equal distance from the first end 2.

In one embodiment, the protrusions P could be in the form of at least one ridge that extends along at least a part of the first surface 4. In one embodiment the protrusions P could also be in the form of at least one ridge that extends across the second surface 8.

Fig. 4 discloses the hook plate key 1 according to the present invention from the side, showing the protrusions P that protrude from the first surface 4. The hook plate key 1 has a first diameter d, from the first surface 4 to the second surface 8 that forms an opposing side to the first surface 4. Each of the protrusions P protrudes from the first surface 4 a distance d₂ that is preferably at least 1% of the first diameter d₁. In some embodiments, the protrusions P may advantageously be larger and protrude at least 1.5% or even more preferably at least 2% of the first diameter d₁. In embodiments where protrusions P are provided on only of the first surface 4, it is advantageous that those protrusions P extend further from the surface than when protrusions P are provided on both the first surface 4 and the second surface 8. However, it is also advantageous that the protrusions P are limited in size so that they are able to fit into the key slot 19 and not hinder insertion of the hook plate key 1. For this reason, the protrusions P should extend less than 10% of the first diameter d₁, preferably less than 5% and more preferably less than 3%.

The reason for this is that the hook plate key 1 must be insertable into the key slot 19 of the hook plate without getting stuck. Also, the key slot 19 generally does not comprise indentations or adjacent spaces into which protrusions P could protrude, so the hook plate key 1 with its at least one protrusion P must be able to fit into the key slot 19 without requiring modifications to the key slot 19 or the hook plate in general.

In some embodiments, the protrusions P could be of different size but it is generally advantageous when the protrusions P each protrude the same distance from the first surface 4.

Advantageously, protrusions P are thus also provided in the second surface 8 that is diametrically opposite the first surface 4. The protrusions P in the second surface 8 can form matching protrusions P to the protrusions P in the first surface 4 and be placed at the same distance from the first end 2. Alternatively, the protrusions P in the second surface 8 can be offset from the protrusions P in the first surface 4.

The protrusions P are in the preferred embodiment provided near the longitudinal edges A, C but could in other embodiments alternatively be provided anywhere on the first surface 4, and optionally on the second surface 8.

In one advantageous embodiment, two protrusions P are provided in the first surface 4 and one protrusion P is provided in the second surface 8. The protrusion P in the second surface 8 is preferably provided at a distance from the first end 2 that is larger than a distance from one of the protrusions P in the first surface 4 but smaller than a distance from the other protrusion P in the first surface. That way, the protrusion P in the second side 8 is between the protrusions P in the first side 4 in a longitudinal perspective.

The method for mounting the hook plate key 1 in the hook plate assembly 10 will now be described in more detail.

In a first and second step, respectively, the hook plate key 1 and the hook plate assembly 10 are provided. Next, in a third step the hook plate key 1 is aligned with the key slot 19 in the hook plate assembly 10 and in a fourth step the hook plate key 1 is inserted into the key slot 19. Preferably, the hook plate key 1 is inserted completely into the key slot 19 and since the protrusions P are provided along the first surface 4 and in some embodiments also along the second surface 8, the hook plate key 1 is held securely in place. In the preferred embodiment, the hook plate key 1 is aligned with the key slot 19 in such a way that the first surface 4 faces in a circumferential direction, i.e. in a direction that is essentially perpendicular to a radial direction. In embodiments where there are protrusions P on both the first side 4 and the second side 8, the hook plate key 1 is oriented in such a way that both the first side 4 and the second side 8 face towards sides of the key slot 19, i.e. in directions that are not radially inwards or radially outwards in relation to a center of the through hole 14. A mounting tool is suitably provided to guide and press the hook plate key 1 into the key slot 19 of the hook plate assembly 10. The mounting tool can suitably have a shape similar to the main pin but with a deeper pin slot, so that the mounting tool when pushed into the through hole 14 will also push the hook plate key 1 downwards in the key slot 19 until the hook plate key 1 reaches a bottom of the key slot 19 and is brought fully into a desired position inside the key slot 19.

Dimensions of the hook plate key 1 may in one embodiment suitably be a longitudinal length of 63 mm, a first diameter of 8 mm from the first surface 4 to the second surface 8 and a diameter from the third surface 5 to the fourth surface 6 of 10 mm. The at least one protrusion P could protrude the distance d₂ of at least 0.1 mm from the first or second surface 4, 8 to be at least 1% of the first diameter.

The method for manufacturing the hook plate key 1 according to a preferred embodiment of the present invention will now be described in more detail. The method comprises providing a hook plate key according to the prior art. Suitable examples include DIN 6885 but other hook plate keys could also be used with the manufacturing method as long as they have an elongated key body.

The hook plate key is thus provided, along with a deformation tool for modifying a shape of the hook plate key. The deformation tool is inserted into a third surface of the hook plate key and force is applied so that the hook plate key is deformed and a protrusion P is created. It is advantageous to apply the deformation tool to a deformation zone that is a portion of the third surface that has a distance to the longitudinal edge of 20-80%of the first diameter of the third surface, preferably 30-70% and more preferably less than 40-60%. It is especially advantageous to apply the deformation tool to the middle of the third surface, i.e. at 50% of the first diameter. This is advantageous in that it allows for a controlled deformation of the key body so that the protrusion P can be created and protrude from the first surface and optionally also from the second surface 8, as desired.

In one embodiment, the deformation tool is a tool for stamping the hook plate key so that an indentation is formed in the third surface and material of the key body is pushed towards the first surface.

According to the present invention, the deformation tool is applied repeatedly to the third surface so that protrusions P are created along the first and second longitudinal edge A, C and protrude from the first surface 4 and the second surface 8, respectively.

Other methods for creating the at least one protrusion are for example (but not limited to) to manufacture the key by machining, casting, sintering or similar method as well as cold or hot-forming of it with the desired protrusion(s) made in shape and measure as a part of the manufactured shape without the need to create it/them by stamping detent(s) on a standard hook plate key.

One example of a hook plate key that can be provided as a basis for manufacturing the hook plate key according to the present invention is DIN 6885 A; another is DIN 6885 B but it is to be noted that any suitable hook plate key on the market can be modified in the manner disclosed herein in order to form the hook plate key according to the present invention.

## Claims

1. Hook plate key (1) for enabling co-rotation of a cylindrical main pin and a hook plate of a coupler for a rail vehicle, the key (1) comprising an elongated key body (7) having a first surface (4) that extends longitudinally from a first end (2) to a second end (3), the key body (7) further comprising at least one protrusion (P) that protrudes from the first surface, and **characterized by** the key body (7) further comprising a second surface (8) that is opposite to the first surface (4) and wherein the key body (7) comprises at least one protrusion (P) that protrudes from the second surface (8).

2. Hook plate key according to claim 1, wherein the key body (7) comprises at least two protrusions (P) in the first surface (4), the protrusions (P) being arranged at a distance from each other in a longitudinal direction.

3. Hook plate key according to claim 1 or 2, wherein the first surface (4) comprises a first longitudinal edge (A), and wherein the hook plate key (1) comprises at least one protrusion (P) protruding from the first surface (4) along the first longitudinal edge (A).

4. Hook plate key according to any previous claim, wherein the key body (7) has a first diameter (d₁) and the at least one protrusion (P) protrudes from the first surface (4) at least 1% of the first diameter (di).

5. Hook plate key according to claim 4, wherein the at least one protrusion (P) protrudes from the first surface (4) at least 1,5% of the first diameter, preferably at least 2%.

6. Hook plate key according to any previous claim, wherein the at least one protrusion (P) is a ridge that extends along the first surface (4).

7. Hook plate key according to claim 1, wherein at least one protrusion (P) that protrudes from the first surface (4) is arranged diametrically opposite to a matching protrusion (P) that protrudes from the second surface (8).

8. Hook plate key according to claim 1 or 7, wherein at least one protrusion (P) that protrudes from the first surface (4) is offset in a longitudinal direction or a transversal direction from a protrusion (P) that protrudes from the second surface (8).

9. Hook plate key according to any previous claim, wherein the at least one protrusion (P) protrudes from the first surface (4) less than 10% of the first diameter (d₁), preferably less than 5% and more preferably less than 3%.

10. Hook plate assembly (10) for a coupler of a rail vehicle, the hook plate assembly comprising
- a hook plate (11),
- an essentially cylindrical through hole (14) in the hook plate (11) for receiving a main pin (13),
- a key slot (19) for holding a key (1) to enable co-rotation of the main pin (13) and the hook plate (11), the key slot (19) being arranged longitudinally along an inner wall (16) of the through hole (14),
and the hook plate assembly (10) further comprising a hook plate key (1) according to any of claims 1-9, wherein the hook plate key (1) is mounted in the key slot (19).

11. Method for manufacturing a hook plate key for a coupler of a rail vehicle, the method comprising the steps of
- providing a hook plate key (1) that comprises an elongated key body (7) having a first surface (4) that extends longitudinally from a first end (2) to a second end (3), the first surface (4) having at least one longitudinal edge (A),
- providing a deformation tool for modifying a shape of the hook plate key,
- creating a protrusion (P) in the first surface (4) by inserting the deformation tool into a deformation zone of a third surface (5) of the key body (1), the third surface (5) being a surface that is essentially perpendicular to the first surface (4) and that is connected to the first surface (4) by the longitudinal edge (A),
and **characterized by**
- creating a protrusion (P) in a second surface (8) by inserting the deformation tool into a deformation zone of the third surface (5) of the key body (7), the second surface (8) being a surface that is opposite the first surface (4).

12. Method according to claim 11, wherein the deformation zone is a portion of a surface that has a distance to a surface in which a protrusion (P) is to be created of 20-80% of a transversal diameter of the key body (7), preferably 30-70%, more preferably 40-60%.

13. Method according to any of claims 11-12, further comprising repeating the step of creating a protrusion (P) for achieving a plurality of protrusions (P) in the first surface (4) and preferably also in the second surface (8).

14. Method for mounting a hook plate key of a coupler of a rail vehicle in a slot of a hook plate, the method comprising the steps of
- providing a hook plate key (1) according to any of claims 1-9
- providing a hook plate (11) having a key slot (19) in a wall (16) of a through hole (14) for receiving a main pin (13),
- aligning the hook plate key (1) with the key slot (19), the hook plate key (1) being arranged in such a way that the first surface (4) faces in a direction that is perpendicular to a radial direction outwards from the through hole (14),
- inserting the hook plate key (1) into the key slot (19).

## Patentansprüche

1. Hakenscheibenpassfeder (1) zum Ermöglichen der gemeinsamen Drehung eines zylindrischen Hauptbolzens und einer Hakenscheibe einer Kupplung für ein Schienenfahrzeug, wobei die Passfeder (1) einen länglichen Passfederkörper (7) mit einer ersten Oberfläche (4) umfasst, die sich in Längsrichtung von einem ersten Ende (2) zu einem zweiten Ende (3) erstreckt, der Passfederkörper (7) ferner mindestens einen Vorsprung (P) umfasst, der aus der ersten Oberfläche herausragt, und **dadurch gekennzeichnet, dass** der Passfederkörper (7) ferner eine zweite Oberfläche (8) umfasst, die der ersten Oberfläche (4) gegenüberliegt, und wobei der Passfederkörper (7) mindestens einen Vorsprung (P) umfasst, der aus der zweiten Oberfläche (8) herausragt.

2. Hakenscheibenpassfeder nach Anspruch 1, wobei der Passfederkörper (7) mindestens zwei Vorsprünge (P) in der ersten Oberfläche (4) umfasst, wobei die Vorsprünge (P) in einer Längsrichtung in einem Abstand voneinander angeordnet sind.

3. Hakenscheibenpassfeder nach Anspruch 1 oder 2, wobei die erste Oberfläche (4) eine erste Längskante (A) umfasst, und wobei die Hakenscheibenpassfeder (1) mindestens einen Vorsprung (P) umfasst, der aus der ersten Oberfläche (4) entlang der ersten Längskante (A) herausragt.

4. Hakenscheibenpassfeder nach einem der vorhergehenden Ansprüche, wobei der Passfederkörper (7) einen ersten Durchmesser (d₁) aufweist und der mindestens eine Vorsprung (P) um mindestens 1% des ersten Durchmessers (d₁) aus der ersten Oberfläche (4) herausragt.

5. Hakenscheibenpassfeder nach Anspruch 4, wobei der mindestens eine Vorsprung (P) um mindestens 1,5% des ersten Durchmessers, vorzugsweise mindestens 2%, aus der ersten Oberfläche (4) herausragt.

6. Hakenscheibenpassfeder nach einem der vorhergehenden Ansprüche, wobei der mindestens eine Vorsprung (P) ein Steg ist, der sich entlang der ersten Oberfläche (4) erstreckt.

7. Hakenscheibenpassfeder nach Anspruch 1, wobei mindestens ein Vorsprung (P), der aus der ersten Oberfläche (4) herausragt, diametral gegenüber einem entsprechenden Vorsprung (P), der aus der zweiten Oberfläche (8) herausragt, angeordnet ist.

8. Hakenscheibenpassfeder nach Anspruch 1 oder 7, wobei mindestens ein Vorsprung (P), der aus der ersten Oberfläche (4) herausragt, in einer Längsrichtung oder einer Querrichtung zu einem Vorsprung (P), der aus der zweiten Oberfläche (8) herausragt, versetzt ist.

9. Hakenscheibenpassfeder nach einem der vorhergehenden Ansprüche, wobei der mindestens eine Vorsprung (P) um weniger als 10% des ersten Durchmessers (d₁), vorzugsweise weniger als 5% und besonders bevorzugt weniger als 3%, aus der ersten Oberfläche (4) herausragt.

10. Hakenscheibenanordnung (10) für eine Kupplung eines Schienenfahrzeugs, wobei die Hakenscheibenanordnung umfasst:
- eine Hakenscheibe (11),
- ein im Wesentlichen zylindrisches Durchgangsloch (14) in der Hakenscheibe (11) zur Aufnahme eines Hauptbolzens (13),
- eine Passfedernut (19) zum Halten einer Passfeder (1), um eine gemeinsame Drehung des Hauptbolzens (13) und der Hakenscheibe (11) zu ermöglichen, wobei die Passfedernut (19) in Längsrichtung entlang einer Innenwand (16) des Durchgangslochs (14) angeordnet ist,
und die Hakenscheibenanordnung (10) ferner eine Hakenscheibenpassfeder (1) nach einem der Ansprüche 1 bis 9 umfasst, wobei die Hakenscheibenpassfeder (1) in der Passfedernut (19) montiert ist.

11. Verfahren zum Herstellen einer Hakenscheibenpassfeder für eine Kupplung eines Schienenfahrzeugs, wobei das Verfahren die folgenden Schritte umfasst:
- Bereitstellen einer Hakenscheibenpassfeder (1), die einen länglichen Passfederkörper (7) mit einer ersten Oberfläche (4) umfasst, die sich in Längsrichtung von einem ersten Ende (2) zu einem zweiten Ende (3) erstreckt, wobei die erste Oberfläche (4) mindestens eine Längskante (A) aufweist,
- Bereitstellen eines Verformungswerkzeugs zum Verändern einer Form der Hakenscheibenpassfeder,
- Erzeugen eines Vorsprungs (P) in der ersten Oberfläche (4) durch Einführen des Verformungswerkzeugs in eine Verformungszone einer dritten Oberfläche (5) des Passfederkörpers (1), wobei die dritte Oberfläche (5) eine Oberfläche ist, die im Wesentlichen senkrecht zu der ersten Oberfläche (4) ist und die mit der ersten Oberfläche (4) durch die Längskante (A) verbunden ist,
und **gekennzeichnet durch**
- Erzeugen eines Vorsprungs (P) in einer zweiten Oberfläche (8) durch Einführen des Verformungswerkzeugs in eine Verformungszone der dritten Oberfläche (5) des Passfederkörpers (7), wobei die zweite Oberfläche (8) eine Oberfläche ist, die der ersten Oberfläche (4) gegenüberliegt.

12. Verfahren nach Anspruch 11, wobei die Verformungszone ein Teil einer Oberfläche ist, der einen Abstand von 20-80% eines Querdurchmessers des Passfederkörpers (7), vorzugsweise 30-70%, besonders bevorzugt 40-60%, zu einer Oberfläche hat, in der ein Vorsprung (P) erzeugt werden soll.

13. Verfahren nach einem der Ansprüche 11 bis 12, ferner umfassend das Wiederholen des Schritts des Erzeugens eines Vorsprungs (P), um eine Vielzahl von Vorsprüngen (P) in der ersten Oberfläche (4) und vorzugsweise auch in der zweiten Oberfläche (8) zu erhalten.

14. Verfahren zum Montieren einer Hakenscheibenpassfeder einer Kupplung eines Schienenfahrzeugs in einer Nut einer Hakenscheibe, wobei das Verfahren die folgenden Schritte umfasst:
- Bereitstellen einer Hakenscheibenpassfeder (1) nach einem der Ansprüche 1-9,
- Bereitstellen einer Hakenscheibe (11) mit einer Passfedernut (19) in einer Wand (16) eines Durchgangslochs (14) zur Aufnahme eines Hauptbolzens (13),
- Ausrichten der Hakenscheibenpassfeder (1) mit der Passfedernut (19), wobei die Hakenscheibenpassfeder (1) so angeordnet wird, dass die erste Oberfläche (4) in eine Richtung weist, die senkrecht zu einer radialen Richtung nach außen von der Durchgangsbohrung (14) ist,
- Einführen der Hakenscheibenpassfeder (1) in die Passfedernut (19).

## Revendications

1. Clef de plaque à crochet (1) pour permettre une corotation d'une broche principale cylindrique et d'une plaque à crochet d'un attelage pour un véhicule ferroviaire, la clef (1) comprenant un corps de clef allongé (7) ayant une première surface (4) qui s'étend longitudinalement depuis une première extrémité (2) jusqu'à une deuxième extrémité (3), le corps de clef (7) comprenant en outre au moins une saillie (P) qui est saillante depuis la première surface, et **caractérisée en ce que** le corps de clef (7) comprend en outre une deuxième surface (8) qui est à l'opposé de la première surface (4) et dans laquelle le corps de clef (7) comprend au moins une saillie (P) qui est saillante depuis la deuxième surface (8).

2. Clef de plaque à crochet selon la revendication 1, dans laquelle le corps de clef (7) comprend au moins deux saillies (P) dans la première surface (4), les saillies (P) étant agencées à une distance les unes des autres dans une direction longitudinale.

3. Clef de plaque à crochet selon la revendication 1 ou 2, dans laquelle la première surface (4) comprend un premier bord longitudinal (A), et dans laquelle la clef de plaque à crochet (1) comprend au moins une saillie (P) qui est saillante depuis la première surface (4) le long du premier bord longitudinal (A).

4. Clef de plaque à crochet selon l'une quelconque des revendications précédentes, dans laquelle le corps de clef (7) présente un premier diamètre (d₁) et l'au moins une saillie (P) est saillante depuis la première surface (4) d'au moins 1 % du premier diamètre (d₁).

5. Clef de plaque à crochet selon la revendication 4, dans laquelle l'au moins une saillie (P) est saillante depuis la première surface (4) d'au moins 1,5 % du premier diamètre, de préférence d'au moins 2 %.

6. Clef de plaque à crochet selon l'une quelconque des revendications précédentes, dans laquelle l'au moins une saillie (P) est une nervure qui s'étend le long de la première surface (4).

7. Clef de plaque à crochet selon la revendication 1, dans laquelle au moins une saillie (P) qui est saillante depuis la première surface (4) est agencée diamétralement à l'opposé d'une saillie (P) correspondante qui est saillante depuis la deuxième surface (8).

8. Clef de plaque à crochet selon la revendication 1 ou 7, dans laquelle au moins une saillie (P) qui est saillante depuis la première surface (4) est décalée dans une direction longitudinale ou dans une direction transversale par rapport à une saillie (P) qui est saillante depuis la deuxième surface (8).

9. Clef de plaque à crochet selon l'une quelconque des revendications précédentes, dans laquelle l'au moins une saillie (P) est saillante depuis la première surface (4) de moins de 10 % du premier diamètre (d₁), de préférence de moins de 5 % et avec plus de préférence de moins de 3 %.

10. Ensemble de plaque à crochet (10) pour un attelage d'un véhicule ferroviaire, l'ensemble de plaque à crochet comprenant
- une plaque à crochet (11),
- un trou traversant sensiblement cylindrique (14) dans la plaque à crochet (11) pour recevoir une broche principale (13),
- une fente de clef (19) pour contenir une clef (1) pour permettre une corotation de la broche principale (13) et de la plaque à crochet (11), la fente de clef (19) étant agencée longitudinalement le long d'une paroi intérieure (16) du trou traversant (14),
et l'ensemble de plaque à crochet (10) comprenant en outre une clef de plaque à crochet (1) selon l'une quelconque des revendications 1 à 9, dans lequel la clef de plaque à crochet (1) est montée dans la fente de clef (19).

11. Procédé de fabrication d'une clef de plaque à crochet pour un attelage d'un véhicule ferroviaire, le procédé comprenant les étapes consistant à
- fournir une clef de plaque à crochet (1) qui comprend un corps de clef allongé (7) ayant une première surface (4) qui s'étend longitudinalement depuis une première extrémité (2) jusqu'à une deuxième extrémité (3), la première surface (4) ayant au moins un bord longitudinal (A),
- fournir un outil de déformation pour modifier une forme de la clef de plaque à crochet,
- créer une saillie (P) dans la première surface (4) par l'insertion de l'outil de déformation dans une zone de déformation d'une troisième surface (5) du corps de clef (1), la troisième surface (5) étant une surface qui est sensiblement perpendiculaire à la première surface (4) et qui est reliée à la première surface (4) par le bord longitudinal (A),
et **caractérisé par**
- la création d'une saillie (P) dans une deuxième surface (8) par l'insertion de l'outil de déformation dans une zone de déformation de la troisième surface (5) du corps de clef (7), la deuxième surface (8) étant une surface qui est à l'opposé de la première surface (4).

12. Procédé selon la revendication 11, dans lequel la zone de déformation est une partie d'une surface présentant une distance jusqu'à une surface dans laquelle une saillie (P) doit être créée de 20 à 80 % d'un diamètre transversal du corps de clef (7), de préférence de 30 à 70 %, avec plus de préférence de 40 à 60%.

13. Procédé selon la revendication 11 ou 12, comprenant en outre la répétition de l'étape de la création d'une saillie (P) pour réaliser une pluralité de saillies (P) dans la première surface (4) et de préférence également dans la deuxième surface (8).

14. Procédé de montage d'une clef de plaque à crochet d'un attelage d'un véhicule ferroviaire dans une fente d'une plaque à crochet, le procédé comprenant les étapes consistant à
- fournir une clef de plaque à crochet (1) selon l'une quelconque des revendications 1 à 9,
- fournir une plaque à crochet (11) ayant une fente de clef (19) dans une paroi (16) d'un trou traversant (14) pour recevoir une broche principale (13),
- aligner la clef de plaque à crochet (1) avec une fente de clef (19), la clef de plaque à crochet (1) étant agencée de telle manière que la première surface (4) soit orientée dans une direction qui est perpendiculaire à une direction radiale vers l'extérieur depuis le trou traversant (14),
- insérer la clef de plaque à crochet (1) dans la fente de clef (19).
